# EUROPEAN PATENT APPLICATION

(11) **EP 2 367 219 A2**
(43) Date of publication of application: **21.09.2011**
(21) Application number: 11158421.5
(22) Date of filing: 16.03.2011
(51) Int. Cl.: H01M 2/04, H01M 2/08, H01M 2/26

(54) **Cylindrical secondary battery and method of manufacturing the same**

(30) Priority: 18.03.2010 JP 2010062663; 29.09.2010 JP 2010218659; 03.02.2011 JP 2011021605
(71) Applicant: Sanyo Electric Co., Ltd., Osaka 570-8677 (JP)
(72) Inventor: Sugii, Hiromasa, Moriguchi-shi, Osaka (JP); Ochi, Makoto, Moriguchi-shi, Osaka (JP); Yamashita, Ryu, Moriguchi-shi, Osaka (JP); Shinohara, Yuji, Moriguchi-shi, Osaka (JP); Nishida, Akira, Moriguchi-shi, Osaka (JP); Matsui, Yu, Moriguchi-shi, Osaka (JP); Ako, Atutoshi, Moriguchi-shi, Osaka (JP); Kitaoka, Kazuhiro, Moriguchi-shi, Osaka (JP)
(74) Representative: Glawe, Delfs, Moll

(57) **Abstract**

The current-collecting lead (10) for being welded to a collector (20) welded to an upper portion of an electrode group (30a) and also to a sealing assembly (36) of an cylindrical secondary battery (A) includes: a flat surface part (11) welded to the collector, and a top part (12) formed to be curved and protrude approximately in the shape of a dome from the flat surface part and welded to the sealing assembly. A central opening (12a) is formed at a central portion of the top part. Around the central opening, a plurality of welding projections (12c) are formed to protrude toward the sealing assembly. The welding projections serve as welding spots to the sealing assembly. The top part is deformed by a pressing force from the sealing assembly to be brought into surface contact with a corner portion of a convex portion (36a-1) formed on a lower surface of the sealing assembly.

## Description

### TECHNICAL FIELD

The present invention relates to a secondary battery such as a nickel-metal hydride storage battery or a nickel-cadmium storage battery. More particularly, the invention relates to a cylindrical secondary battery, in which an upper collector is welded to one electrode substrate extending from an upper portion of a spiral electrode group having a positive electrode plate and a negative electrode plate spirally wound with a separator interposed therebetween, and the upper collector is connected through a current-collecting lead to a sealing assembly for sealing a mouth portion of a cylindrical metal outer can. The invention also relates to a method of manufacturing the cylindrical secondary battery.

### BACKGROUND ART

In general, a cylindrical secondary battery such as a nickel-metal hydride storage battery or a nickel-cadmium storage battery has a sealed structure formed as follows. A positive electrode plate and a negative electrode plate are spirally wound with a separator interposed therebetween. Collectors are connected to the end portions of the positive electrode plate and the negative electrode plate to form an electrode assembly. The electrode assembly is accommodated in a metal outer can, and a lead portion extending from the positive electrode collector is welded to a sealing assembly. The sealing assembly is then attached to a mouth portion of the outer can with an insulating gasket interposed therebetween. When such cylindrical secondary batteries are used in the application of automobiles such as HEV (Hybrid Electric Vehicles) and PEV (Pure Electric Vehicles), high output power is required, and therefore, the internal resistance of the batteries has to be minimized.

For example, JP-A-2006-331993 proposes a technique for reducing the internal resistance of a battery. According to the technique for reducing the internal resistance as proposed in JP-A-2006-331993, a current-collecting lead with a truncated cone shape is connected by welding between a positive electrode collector and a sealing assembly. The use of such a current-collecting lead with a truncated cone shape shortens the current-collecting path between the positive electrode collector and the sealing assembly, thereby reducing the internal resistance.

As shown in Fig. 13, the current-collecting lead 60 proposed in JP-A-2006-331993 includes a plate-shaped top part 61, a lateral wall part 62 extending obliquely downwardly from the outer periphery of the top part 61 so as to expand, and a flange portion 63 arranged at the outer periphery of the lower end of the lateral wall part 62. Slits 64 are longitudinally formed in the lateral wall part 62 and the flange portion 63 from the lower ends at circumferential intervals.

Accordingly, when a sealing assembly and a positive electrode collector, which are not shown, are pressured, the lateral wall part 62 between the slits 64 formed in the lateral wall part 62 and the flange portion 63 is bent outwardly to expand so as to absorb the height and maintain appropriate contact pressure (pressure at contact points).

In the current-collecting lead 60 proposed in JP-A-2006-331993, welding projections 63a are provided at parts of the flange portion 63 that are sandwiched between slits 64 in order to form welding spots between the current-collecting lead 60 and the not-shown positive electrode collector (upper collector). On the other hand, welding projections 61b are provided around a central opening 61a of the top part 61 in order to form welding spots between the top part 61 and the sealing assembly. Projection welding is carried out using the welding projections 61b and the welding projections 63a.

Therefore, the top part 61 of the current-collecting lead 60 and the sealing assembly are connected together only at the welding spots formed by the welding projections 61b provided on the top part 61. In this case, since the welding projections 61b are formed on the limited plane of the top part 61, the number of the arranged welding projections 61b is limited. Thus, because of the point connections brought about by the limited number of welding projections 61b, the internal resistance of the battery is increased to cause an output loss. Therefore, a high-power cylindrical secondary battery cannot be obtained.

In this case, the resistance of the current-collecting lead can be reduced by increasing the thickness of the current-collecting lead. However, if the thickness of the current-collecting lead is increased, the mechanical strength of the current-collecting lead becomes excessively high. This makes it difficult for the current-collecting lead to collapse at the time of welding the sealing assembly to the current-collecting lead and at the time of sealing. This result in variations in battery height, which poses a new problem that the essential function of the current-collecting leads cannot be maintained.

### SUMMARY

An advantage of some aspects of the present invention is to provide a cylindrical secondary battery with excellent output characteristics by using a current-collecting lead having excellent current-collecting performance to reduce internal resistance.

In a cylindrical secondary battery according to an aspect of the invention, an upper collector is welded to one electrode substrate extending from an upper portion of a spiral electrode group having a positive electrode plate and a negative electrode plate spirally wound with a separator interposed therebetween. The upper collector is connected through a current-collecting lead to a sealing assembly for sealing a mouth portion of a cylindrical metal outer can.
The current-collecting lead formed by press-forming a metal plate includes: a flat surface part formed in approximately the same shape as an outer shape of the upper collector and welded to the upper collector, and a top part formed to be curved and protrude approximately in the shape of a dome from the flat surface part and welded to the sealing assembly. A central opening is formed at a central portion of the top part. Around the central opening, a plurality of welding projections are formed to protrude from the top part toward the sealing assembly. The plurality of welding projections serve as welding spots to the sealing assembly. The top part is deformed by a pressing force from the sealing assembly to be brought into surface contact with a corner portion of a convex portion formed on a lower surface of the sealing assembly.

When the top part is deformed by the pressing force from the sealing assembly to be brought into surface contact with the corner portion of the convex portion formed on the lower surface of the sealing assembly in this manner, in addition to the welding spots to the sealing assembly that are formed from the plurality of welding projections, the surface contact increases the contact with the sealing assembly, thereby increasing the current-collecting efficiency from the current-collecting lead to the sealing assembly. Therefore, this aspect of the invention provides a cylindrical secondary battery having excellent output characteristics with reduced internal resistance. In this case, a plurality of welding projections may be formed at the convex portion formed on the lower surface of the sealing assembly so as to protrude from the convex portion toward the periphery of the central opening of the top part, and the plurality of welding projections may serve as the welding spots to the top part.

Preferably, an upper flat surface portion is formed in a region including the central portion of the top part. In a boundary portion between the upper flat surface portion and an inclined region of the top part, if an inner angle R1 between the upper flat surface portion and the inclined region of the top part is set to be 152° or more and 165° or less (152° ≤ R1 ≤ 165°), the current-collecting lead is easily deformed by the pressing force at the time of sealing the battery, thereby preventing the deformation of the bottom of the battery can and the deformation of the sealing assembly by the pressing force. Therefore, it is preferable that the inner angle R1 between the upper flat surface portion and the inclined region of the top part be 152° or more and 165° or less (152° ≤ R1 ≤ 165°).

In a boundary portion between the flat surface part and the inclined region of the top part, if an outer angle R2 between the flat surface part and the inclined region of the top part is 90° or more and 115° or less (90° ≤ R2 ≤ 115°), the current-collecting lead is easily deformed by the pressing force at the time of sealing the battery, thereby preventing the deformation of the bottom of the battery can and the deformation of the sealing assembly by the pressing force. Therefore, it is preferable that the outer angle R2 between the flat surface part and the inclined region of the top part be 90° or more and 115° or less (90° ≤ R2 ≤ 115°).

It is preferable that the relationship D2 > D1 is satisfied where D1 is the diameter of the convex portion formed on the lower surface of the sealing assembly and D2 is the diameter of a base portion of the top part that is adjacent to the flat surface part. Then, the pressing force at the time of sealing the battery causes the convex portion formed on the lower surface of the sealing assembly to thrust into and deform the dome-shaped top part, so that the top part can be brought into surface contact with the corner portion of the convex portion formed on the lower surface of the sealing assembly. In this case, when a plurality of slits are formed at regular intervals radially toward the flat surface part at a distance away from the central opening formed at the central portion of the top part, the dome-shaped top part is easily deformed by the pressing force at the time of sealing the battery. This makes it possible to increase the thickness of the current-collecting lead of this kind. Accordingly, a current-collecting lead with even lower resistance can be achieved.

It is preferable that a central opening be formed at the central portion of the upper collector. A plurality of inner slits open to the central opening and arranged radially from the central opening toward the peripheral portion and a plurality of outer slits open to the outside of the upper collector and arranged radially toward the central opening are formed by a burring process. The burrs formed at the end portions of the inner and outer slits are welded to one electrode substrate extending from the upper portion of the spiral electrode group. Accordingly, the welding spots to one electrode substrate can be formed uniformly from the central portion to the outer peripheral portion of the spiral electrode group. This aspect of the invention provides a cylindrical secondary battery with reduced internal resistance and having excellent output characteristics.

In this case, it is preferable that the ratio between the number of outer slits and the number of inner slits be 2:1. This compensates for reduced current-collecting performance resulting from the increased distance between the welding spots to the substrate exposed at one electrode end portion, at the outer peripheral portion of the spiral electrode group. Therefore, this aspect of the invention provides a cylindrical secondary battery with improved current-collecting performance and with reduced internal resistance. It is preferable that a semicircular burring hole be formed at the outer peripheral portion of the upper collector, and the semicircular burring hole be welded to one electrode substrate extending from the upper portion of the spiral electrode group. Accordingly, a number and an area of welding spots are increased at the outer peripheral portion of the spiral electrode group, thereby further improving the current-collecting performance.

It is preferable that a beveled portion be formed at a tip end of a sidewall of the outer slit formed in the upper collector. This prevents snagging of the upper collector during production thereby improving ease of handling and thus production efficiency. It is preferable that, in the outer peripheral portion of the flat surface part welded to the upper collector, semicircular openings each having the same shape as the semicircular burring hole be formed at locations corresponding to a plurality of semicircular burring holes formed in the outer peripheral portion of the upper collector. Accordingly, the positioning of the current-collecting lead with the collector is facilitated with extremely high precision. This aspect of the invention provides a cylindrical secondary battery of high quality with high reliability.

According to an aspect of the invention, a method of manufacturing such a cylindrical secondary battery includes: welding an upper collector to one electrode substrate extending from an upper portion of the spiral electrode group; welding a current-collecting lead to the upper collector, the current-collecting lead being formed by press-forming a metal plate and including a flat surface part formed in approximately the same shape as the outer shape of the upper collector and a top part formed to be curved and protrude approximately in the shape of a dome from the flat surface part, the top part having a central opening at a central portion thereof and a plurality of welding projections formed around the central opening to protrude from the top part toward a sealing assembly; accommodating the electrode group with the current-collecting lead welded to the upper collector in a cylindrical metal outer can, and thereafter pouring an electrolyte into the outer can; arranging the sealing assembly, having a convex portion on the lower surface thereof, on a mouth portion of the outer can containing the electrolyte, bringing the sealing assembly into abutment with the top part of the current-collecting lead to weld contact portions between the plurality of welding projections and the convex portion formed on the lower surface of the sealing assembly, and pressing the sealing assembly such that a corner portion of the convex portion formed on the lower surface of the sealing assembly is in surface contact with the top part. In this case, a plurality of welding projections may be formed on the convex portion on the lower surface of the sealing assembly so as to protrude from the convex portion toward the periphery of the central opening of the top part, and contact portions between the plurality of welding projections and the top part may be welded.

According to some aspects of the invention, the current-collecting efficiency from the current-collecting lead to the sealing assembly is enhanced, and therefore, a cylindrical secondary battery with reduced internal resistance and having excellent output characteristics is provided.

### BRIEF DESCRIPTION OF THE DRAWINGS

The invention will be described with reference to the accompanying drawings, wherein like numbers reference like elements.
Fig. 1 shows a current-collecting lead according to an embodiment of the invention, Fig. 1A being a front view schematically showing a current-collecting lead formed by press-forming and Fig. 1B being a side view as viewed from the direction of arrow IB in Fig. 1A.
Fig. 2 shows an upper collector according to the embodiment of the present invention, Fig. 2A being a front view schematically showing the upper collector formed by press-forming and Fig. 2B being a front view schematically showing a state in which the current-collecting lead shown in Fig. 1A is welded on the upper collector shown in Fig. 2A.
Fig. 3 shows the size relation between a sealing assembly and the current-collecting lead, Fig. 3A being a partially cut-away, side view schematically showing the sealing assembly, Fig. 3B being a partially cut-away, side view schematically showing the current-collecting lead, Fig. 3C being an enlarged cross-sectional view of a portion IIIC in Fig. 3B, Fig. 3D being an enlarged cross-sectional view showing a portion IIID in Fig. 3B, and Fig. 3E being a partially cut-away, side view schematically showing a sealing assembly according to a modification.
Fig. 4 is a partially cut-away, side view schematically showing a state in which the upper collector shown in Fig. 2A is welded on an electrode group, the current-collecting lead shown in Fig. 1A is welded to the upper collector and accommodated in an outer can, the sealing assembly shown in Fig. 3A is mounted on a mouth portion of the outer can, and the current-collecting lead is pressed and sealed by the sealing assembly.
Fig. 5 shows an upper collector according to a first modification of the invention, Fig. 5A being a front view thereof and Fig. 5B being an enlarged side view of a portion VB in Fig. 5A as viewed from the direction of the arrow.
Fig. 6 shows an upper collector according to a second modification of the invention.
Fig. 7 shows an upper collector according to a third modification of the invention.
Fig. 8 shows an upper collector according to a fourth modification of the invention.
Fig. 9 shows an upper collector according to a fifth modification of the invention.
Fig. 10 shows a current-collecting lead according to a first modification of the invention.
Fig. 11 shows a current-collecting lead according to a second modification of the invention.
Fig. 12 is a graph showing the relation between a substrate exposed at an upper electrode end portion of a spiral electrode group and welding spots (total number of welding spots) to the upper collector.
Fig. 13 is a perspective view schematically showing a current-collecting lead of a prior art.

### DESCRIPTION OF EXEMPLARY EMBODIMENTS

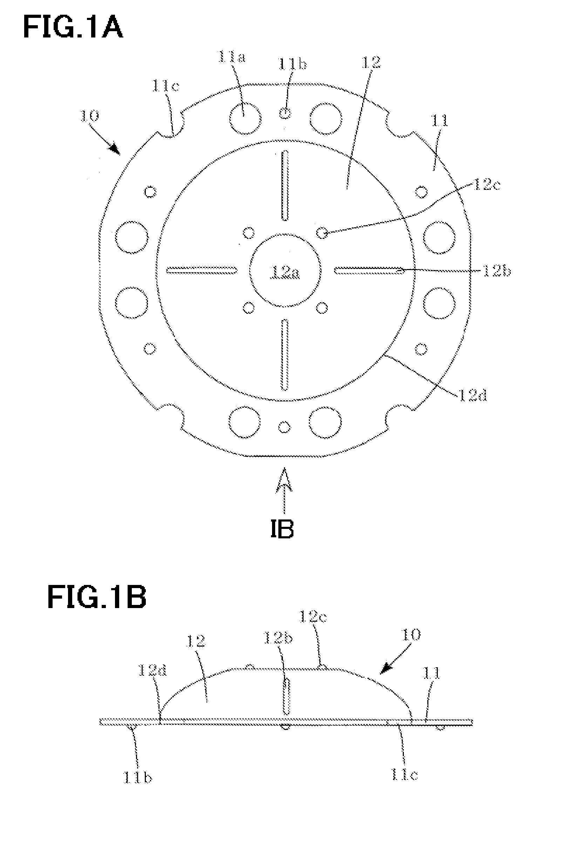

In the following, an embodiment of a cylindrical secondary battery according to the invention will be described based on Fig. 1 to Fig. 4. In this case, a nickel-metal hydride storage battery is used as a cylindrical secondary battery, by way of example. However, the invention is not limited thereto and can be modified as appropriate without departing from the scope and spirits of the technical concepts set forth in the claims.

### 1. Current-Collecting Lead (Positive Electrode Current-Collecting Lead)

### (1) Embodiment

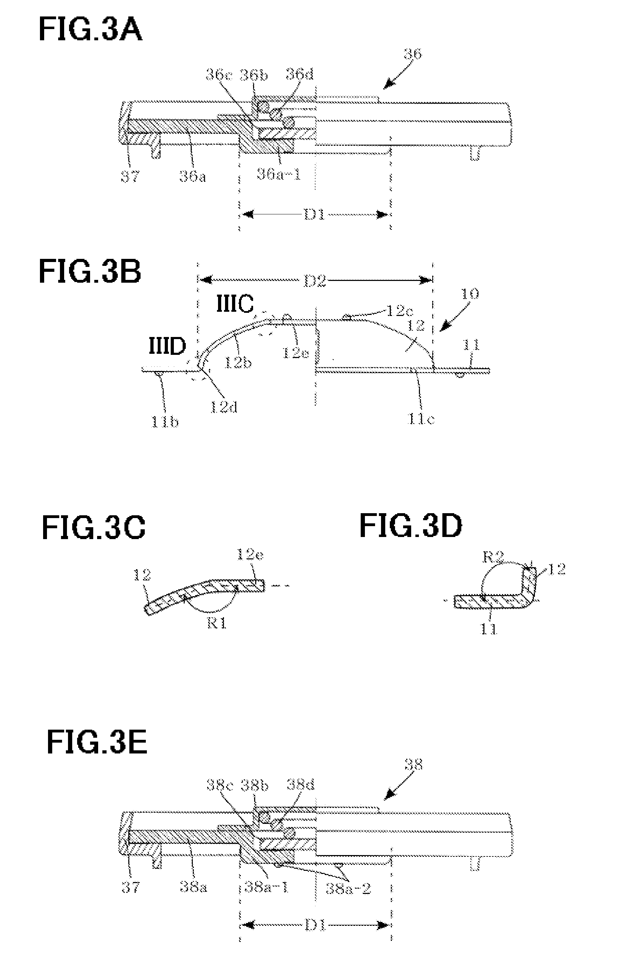

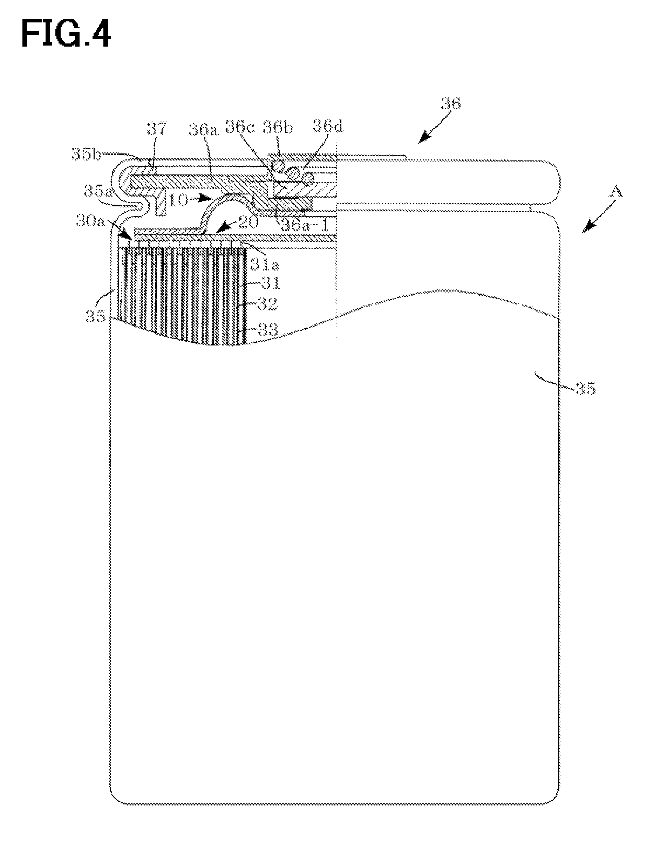

A current-collecting lead 10 in this embodiment (in this case, a current-collecting lead for the positive electrode) is formed in the shape of a predetermined dome by press-forming a nickel-plated steel plate (in this case, having a thickness of 0.3 mm). As shown in Fig. 1A, the current-collecting lead 10 includes an approximately ring-shaped flat surface part 11 to be welded to an upper collector (in this case, positive electrode collector) 20, which will be described later, and a top part 12 formed to be curved and protrude approximately in the shape of a dome from the flat surface part 11. The top part 12 is to be welded to a sealing assembly 36, which will be described later (see Figs. 3 and 4).

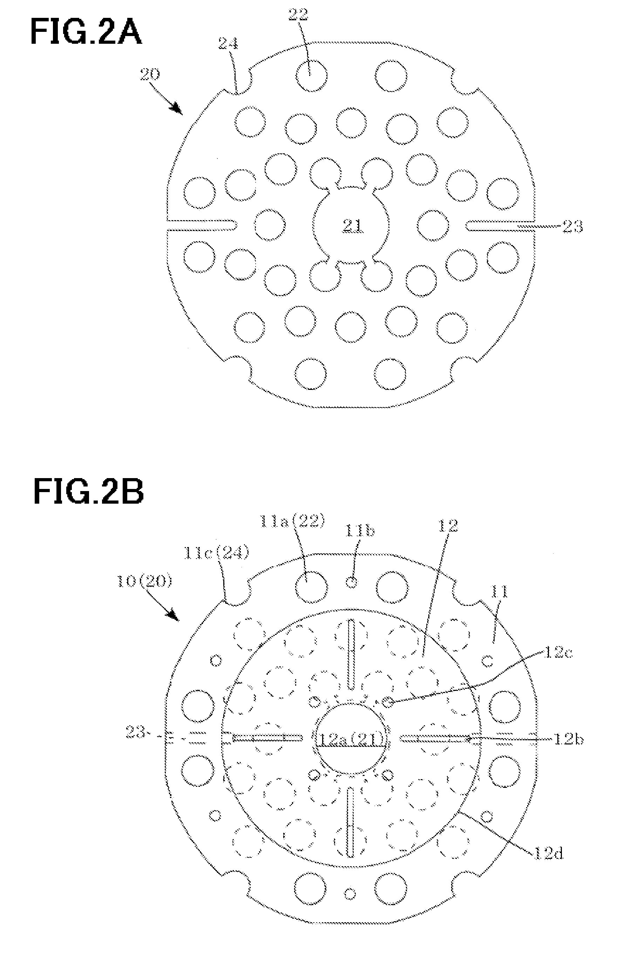

Openings (circular openings) 11a are formed on the circumference on the approximately central line of the approximately ring-shaped flat surface part 11 and at locations corresponding to circular burring holes 22 formed in the upper collector 20 as described later. The openings 11a have the same shape as that of the burring holes 22. First welding projections 11b to be welded to the upper collector 20 are formed at approximately regular intervals on the circumference on the approximately central line of the approximately ring-shaped flat surface part 11 and at locations where openings 11a are not arranged. The first welding projections 11b are formed to protrude toward the upper collector 20 (from the front face toward the back face of the drawing sheet in Fig. 1A and Fig. 2B). Furthermore, in the outer peripheral portion of the flat surface part 11, openings (semicircular openings) 11c are formed at locations corresponding to semicircular burring holes 24 formed in the outer peripheral portion of the upper collector 20. The openings 11c have the same shape as that of the burring holes 24.

In this case, when the openings 11a having the same shape as that of the burring holes 22 are formed at locations corresponding to the burring holes 22 formed in the upper collector 20, the openings 11a and the burring holes 22 are connected in communication with each other to function as an inlet for electrolyte. Accordingly, when electrolyte is poured into the outer can after the current-collecting lead 10 is welded to the upper collector 20, the electrolyte can easily penetrate into the electrode group through the openings 11a and the burring holes 22.

Furthermore, when the first welding projections 11b are formed to protrude at approximately regular intervals on the circumference on the approximately central line of the flat surface part 11, electric current can be collected uniformly from the upper collector 20 to the current-collecting lead 10. In addition, when the openings 11c having the same shape as that of the burring holes 24 are formed at locations corresponding to the semicircular burring holes 24 formed in the outer peripheral portion of the upper collector 20, the positioning of the current-collecting lead 10 with the upper collector 20 is facilitated with extremely high precision. In addition, the provision of the semicircular burring holes 24 increases a number and an area of the welding spots on the periphery, thereby improving the current-collecting performance.

On the other hand, in the top part 12, a plurality of slits 12b are formed at regular intervals to extend radially toward the flat surface part 11, from a starting point at a predetermined distance away from a central opening 12a to an end point at a predetermined distance away from a base portion adjacent to the flat surface part 11. The central opening 12a is formed at the central portion that is the apex of the top part 12. A plurality of second welding projections 12c to be welded to a sealing plate 36a of the sealing assembly 36 are formed at approximately regular intervals around the central opening 12a so as to protrude toward the sealing assembly 36 (from the back face toward the front face of the drawing sheet in Fig.1A and Fig. 2B).

As will be described later, a convex portion 36a-1 protruding downward is formed at the central portion of the sealing plate 36a. As shown in Fig. 3A and Fig. 3B, a base portion 12d is formed so as to satisfy the relation D2 > D1, where D1 is the diameter of the convex portion 36a-1 and D2 is the diameter of the base portion 12d of the top part 12 adjacent to the flat surface part 11. Accordingly, the pressing force from the sealing assembly 36 at the time of sealing the battery causes the convex portion 36a-1 formed on the lower surface of the sealing assembly 36 to thrust into and deform the dome-shaped top part 12. Thus, as shown in Fig. 4, the top part 12 can be brought into surface contact with the corner portion of the convex portion 36a-1 formed on the lower surface of the sealing assembly 36.

In this case, since the slits 12b are formed at regular intervals radially toward the flat surface part 11 at a distance away from the central opening 12a of the top part 12, the dome-shaped top part 12 can be easily deformed by the pressing force from the sealing assembly 36 at the time of sealing the battery. This makes it possible to increase the thickness of the current-collecting lead 10, resulting in the current-collecting lead 10 with low resistance. Furthermore, since the second welding projections 12c protruding toward the sealing assembly 36 are formed around the central opening 12a of the top part 12 to serve as welding spots to the sealing assembly 36, electric current can be collected uniformly from the current-collecting lead 10 to the sealing assembly 36.

In a region including the central portion of the top part 12, an upper flat surface portion 12e is formed. In a boundary portion between the upper flat surface portion 12e and an inclined region of the top part 12, an inner angle R1 (see Fig. 3C) between the upper flat surface portion 12e and the inclined region of the top part 12 is set to be 152° or more and 165° or less (152° ≤ R1 165°). This is because it has been revealed that if the inner angle R1 between the upper flat surface portion 12e and the inclined region of the top part 12 is set to be 152° or more and 165° or less (152° ≤ R1 ≤ 165°), the current-collecting lead 10 is easily deformed by the pressing force at the time of sealing the battery. If the current-collecting lead 10 is easily deformed, the deformation of the bottom of an outer can 35 (see Fig. 4) and the deformation of the sealing assembly 36 (see Fig. 4) by the pressing force can be prevented.

In addition, in a boundary portion between the flat surface part 11 and the inclined region of the top part 12, an outer angle R2 between the flat surface part 11 and the inclined region of the top part 12 is set to be 90° or more and 115° or less (90° ≤ R2 ≤ 115°). This is because it has been revealed that if the outer angle R2 (see Fig. 3D) between the flat surface part 11 and the inclined region of the top part 12 is set to be 90° or more and 115° or less (90° ≤ R2 ≤ 115°), the current-collecting lead 10 can be easily deformed by the pressing force at the time of sealing the battery.
Based on the foregoing, when the inner angle R1 between the upper flat surface portion 12e and the inclined region of the top part 12 is set to be 152° or more and 165° or less (152° ≤ R1 ≤ 165°) and when the outer angle R2 between the flat surface part 11 and the inclined region of the top part 12 is set to be 90° or more and 115° or less (90° ≤ R2 ≤ 115°), the current-collecting lead 10 can be deformed even more easily, thereby preventing the deformation of the bottom of the outer can 35 (see Fig. 4) and the deformation of the sealing assembly 36 (see Fig. 4) by the pressing force.

### (2) Comparative Example (Related Art)

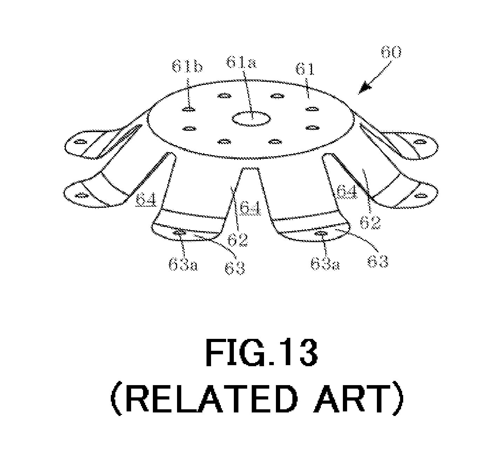

On the other hand, as shown in Fig. 13, a current-collecting lead 60 of a comparative example (related art) is formed by press-forming a nickel-plated steel plate (in this case, having a thickness of 0.3 mm). The current-collecting lead 60 includes a plate-like top part 61 and a lateral wall part 62 extending obliquely downwardly from the outer periphery of the top part 61. A flange portion 63 is formed at the outer periphery of the lower end of the lateral wall part 62. Slits 64 are longitudinally formed in the lateral wall part 62 and the flange portion 63 from the lower ends at circumferential intervals.

In this case, a central opening 61a is provided at the central portion of the top part 61. Around the central opening 61a, a plurality of second welding projections 61b protruding toward a sealing assembly (from the back face to the front face of the drawing sheet in Fig. 13) are formed to serve as welding spots when being welded to the bottom surface of the sealing assembly. First welding projections 63a are provided toward a positive electrode collector (upper collector) (from the front face to the back face of the drawing sheet in Fig. 13) between slits 64 in the flange portion 63 in order to form welding spots to the positive electrode collector (upper collector). Then, projection welding is carried out using the second welding projections 61b and the first welding projections 63a.

### 2. Cylindrical Secondary Battery

### (1) Spiral Electrode Group

First, a nickel sintered porous body is formed on a surface of an electrode plate substrate of perforated metal. Then, the pores of the nickel sintered porous body are impregnated with a nickel hydroxide-based active material by chemical impregnation. Then, after being dried, the resultant product is rolled to a predetermined thickness and is cut to a predetermined size to form a nickel positive electrode plate 31. At one end (the upper portion in Fig. 4) in the width direction of the nickel positive electrode plate 31, a substrate-exposed portion 31a is formed in which the electrode plate substrate is exposed.

A paste-like negative electrode active material mainly including hydrogen storage alloy is coated on the surface of an electrode plate substrate of perforated metal. After being dried, the resultant product is rolled to a predetermined thickness and is cut to a predetermined size to form a hydrogen storage alloy negative electrode plate 32. At one end (not shown) in the width direction of the hydrogen storage alloy negative electrode plate 32, a substrate-exposed portion (not shown) is formed in which the electrode plate substrate is exposed. Then, as shown in Fig. 4, the nickel positive electrode plate 31 and the hydrogen storage alloy negative electrode plate 32 are spirally wound with a separator 33 interposed to form a spiral electrode group 30a. It is noted that the substrate-exposed portion 31a protrudes at one end (the upper portion in Fig. 4) in the height direction of the spiral electrode group 30a and the substrate-exposed portion (not shown) protrudes at the other end (not shown).

### (2) Positive Electrode Collector and Negative Electrode Collector

As shown in Fig. 2A, the positive electrode collector (in this case, the upper collector) 20 is formed in an approximately circular shape (having the maximum diameter of 30 mm). A central opening 21 for receiving a welding electrode is formed at the central portion of the positive electrode collector 20. A number of burring holes 22 (for example, each having a diameter of 2 mm, with a burring height of 0.4 mm, and with a burring thickness of 0.1 mm) are formed from the periphery of the central opening 21 toward the end portion. In the outer peripheral portion of the positive electrode collector 20, a pair of slits 23 open to the edge and two pairs of the semicircular burring holes 24 are formed in order to decrease reactive welding current and to increase active welding current.
Although not shown, the negative electrode collector (in this case, the lower collector) has a structure generally similar to that of the positive electrode collector 20 as described above, and therefore, a detailed description thereof is not repeated here.

### (3) Nickel-Metal Hydride Storage Battery

An example of fabrication of a nickel-metal hydride storage battery will be described below based on Fig. 4, which is formed as a cylindrical secondary battery using the spiral electrode group 30a having the above-noted structure, the positive electrode collector 20, the negative electrode collector, and the current-collecting lead 10 (60) as described above.
First, the negative electrode collector is welded to the substrate-exposed portion (not shown) of the hydrogen storage alloy negative electrode plate 32 that is exposed at the lower end surface of the spiral electrode group 30a. On the other hand, the positive electrode collector 20 is welded to the substrate-exposed portion 31a of the nickel positive electrode plate 31 that is exposed at the upper end surface of the spiral electrode group 30a. Thus, an electrode assembly is formed.

Thereafter, the current-collecting lead 10 (60) is arranged on the positive electrode collector 20 welded to the upper end of the spiral electrode group 30a. Then, a welding electrode is pushed onto the upper surface portions of the first welding projections 11b (63a) to spot-weld the current-collecting lead 10 (60) to the positive electrode collector 20. Accordingly, using the first welding projections 11b or 63a formed on the ring-shaped flat surface part 11 or the flange portion 63 of the current-collecting lead 10 (60) as welding spots, the current-collecting lead 10 (60) is welded to the positive electrode collector 20.

Thereafter, the spiral electrode group 30a with the current-collecting lead 10 (60) welded to the positive electrode collector 20 is accommodated in the nickel-plated iron outer can 35 shaped in a cylinder with a base (whose outer bottom surface serves as a negative electrode external terminal). Then, a welding electrode is inserted into a space formed in the central portion of the spiral electrode group 30a to spot-weld the negative electrode collector welded to the hydrogen storage alloy negative electrode plate 32, to the inner bottom surface of the outer can 35. Accordingly, the negative electrode collector is welded to the inner bottom surface of the outer can 35.

Then, an insulating ring (not shown) is inserted on the upper inner circumference of the outer can 35, and a groove is formed on the upper outer circumference of the outer can 35 to form an annular concave portion 35a at the upper end portion of the insulating ring. Thereafter, alkaline electrolyte in the form of an aqueous solution of 7N potassium hydroxide (KOH) is poured into the outer can 35. Thereafter, the sealing assembly 36 is arranged on the current-collecting lead 10 (60). As shown in Fig. 3, the sealing assembly 36 is formed from a sealing plate 36a and a positive electrode cap (positive electrode external terminal) 36b. In the positive electrode cap 36b, a valve is provided including a valve plate 36c and a spring 36d. Therefore, at the central portion of the sealing plate 36a, a convex portion 36a-1 is formed to protrude downward. In the middle of the sealing assembly 36, a vent hole is formed, and around the periphery of the sealing assembly 36, an insulating gasket 37 is fitted beforehand.

Then, a pair of welding electrodes is arranged at the top of the sealing assembly 36 and the bottom of the outer can 35. Thereafter, under pressure of 2×10⁶ N/m², a voltage of 24 V is applied between the pair of welding electrodes and welding current of 3 kA is fed for 15 msec to perform a welding process. Thus, using the second welding projections 12c (61b) formed on the top part 12 (61) of the current-collecting lead 10 (60) as welding spots, the sealing assembly 36 is welded to the current-collecting lead 10 (60). Thereafter, a mouth edge 35b of the outer can 35 is crimped inward and sealed, resulting in a 6.0 Ah nickel-metal hydride storage battery A (using the current-collecting lead 10) as shown in Fig. 4 and a 6.0 Ah nickel-metal hydride storage battery B (using the current-collecting lead 60).
In this case, as shown in Fig. 4, in the battery A, the convex portion 36a-1 formed on the lower surface of the sealing plate 36a of the sealing assembly 36 is thrust into and deforms the dome-shaped top part 12 by the pressing force at the time of sealing. Accordingly, the top part 12 can be brought into surface contact with the corner portion of the convex portion 36a-1 formed on the lower surface of the sealing assembly 36.

### (5) Evaluation Test

The batteries A and B fabricated as described above were charged to 120% of SOC with charging current of 1 It in an atmosphere at a temperature of 25°C, and after 1-hour interval, discharged with discharging current of 1 It in an atmosphere at a temperature of 25°C until the battery voltages reached 0.9 V. This charge/discharge cycle was repeated 10 times to activate the batteries. Thereafter, the batteries A and B of 20 cells each were charged with charging current of 1 It in the atmosphere at a temperature of 25°C up to 50% battery capacity and left for 1 hour in an open circuit state. Thereafter, charge/discharge for 10 seconds was repeated up to 200 A, with 30-minute intervals between the steps. Then, a current value (discharge power) was found when the line obtained by the least-squares method based on the voltages at the time of 10-second discharge and the discharge current values reached 0.9 V. This discharge characteristics evaluation test was conducted for the batteries A and B. Given that the 10th-second discharge power of the battery B was 100, the ratio of the 10th-second discharge power of the battery A to that of the battery B was found (the 10th-second discharge power ratio). The results are shown in Table 1 below.

**Table 1**

| Battery | 10th-second discharge power ratio |
|---|---|
| Battery A | 103 |
| Battery B | 100 |

As is clear from the results in Table 1 above, the 10th-second discharge power ratio of the battery B is 100, whereas the 10th-second discharge power ratio of the battery A is 103, which indicates that the 10th-second discharge power ratio of the battery A is improved by 3% as compared with the battery B.
The reason is assumed as follows. In the battery B of the related art (comparative example), the connection between the top part 61 of the current-collecting lead 60 and the sealing assembly 36 is point connection brought about by the second welding projections 61b provided on the top part 61, so that the internal resistance of the battery is increased to cause an output loss, thereby decreasing the output characteristics.

By contrast, in the battery A, the pressing force at the time of sealing causes the convex portion 36a-1 formed on the lower surface of the sealing plate 36a of the sealing assembly 36 to thrust into and deform the dome-shaped top part 12, so that the top part 12 can be brought into surface contact with the corner portion of the convex portion 36a-1 formed on the lower surface of the sealing assembly 36. Accordingly, in addition to the welding spots to the sealing assembly 36 that are formed from the second welding projections 12c, the surface contact increases the contact with the sealing assembly 36, thereby enhancing the current-collecting efficiency from the current-collecting lead 10 to the sealing assembly 36. As a result, the internal resistance is reduced, thereby achieving excellent output characteristics.

In this case, the slits 12b are formed at regular intervals radially toward the flat surface part 11 at a distance away from the central opening 12a formed at the central portion of the top part 12, so that the dome-shaped top part 12 is easily deformed by the pressing force at the time of sealing the battery. Moreover, in the flat surface part 11 welded to the upper collector 20, the openings 11a having the same shape as that of the burring holes 22 are formed at locations corresponding to the burring holes 22 formed in the upper collector 20, so that the poured electrolyte can easily penetrate into the electrode group 30a, thereby improving the productivity of batteries of this kind.
Furthermore, in the outer peripheral portion of the flat surface part 11 of the current-collecting lead 10, the semicircular holes 11c having the same shape as that of the burring holes 24 are formed at locations corresponding to the semicircular burring holes 24 formed in the outer peripheral portion of the upper collector 20, so that the positioning of the current-collecting lead 10 with the upper collector 20 is facilitated with extremely high precision. The provision of the semicircular burring holes 24 increases a number and an area of welding spots in the outer peripheral portion, thereby improving the current-collecting performance.

### 3. Modifications of Upper Collector (Positive Electrode Collector)

In the embodiment above, the upper collector (positive electrode collector) 20 including a number of circular burring holes 22 is used. However, the upper collector (positive electrode collector) suitable for the above-noted current-collecting lead is applicable to various modifications. Then, suitable modifications of the upper collector (positive electrode collector) are discussed below.

### (1) First Modification

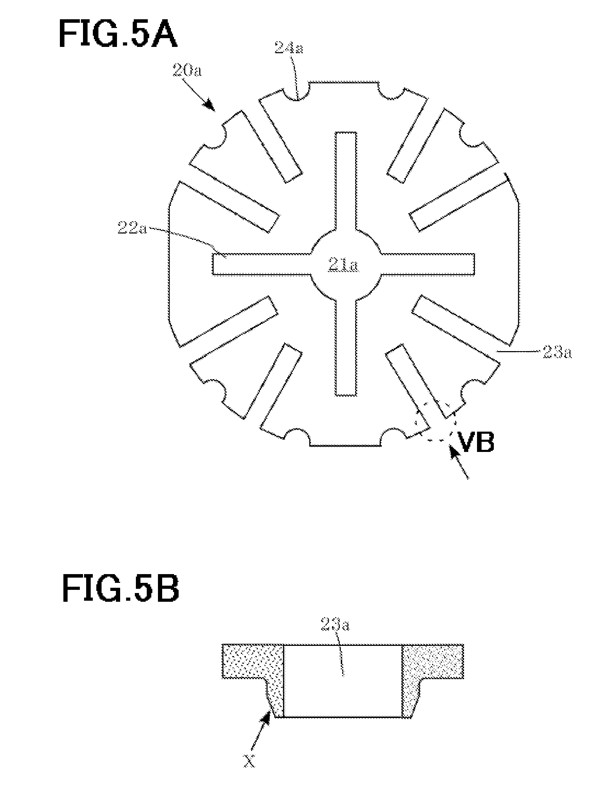

An upper collector (in this case, a positive electrode collector) 20a according to a first modification is formed in an approximately circular shape (having the maximum diameter of 30 mm), as shown in Fig. 5A. A central opening 21a for receiving a welding electrode is formed at the central portion. A plurality of (four in this example, although any appropriate number can be set) inner slits 22a open to the central opening 21a are arranged radially from the central opening 21a toward the peripheral portion. A plurality of (eight in this example, although any appropriate number can be set) outer slits 23a open to the outside of the upper collector 20a are arranged radially toward the central opening 21a. The inner slits 22a and the outer slits 23a are formed by a burring process. In this case, the ratio between the number of outer slits 23a and the number of inner slits 22a is set to be 2:1.

Furthermore, an appropriate number (eight in this example) of semicircular burring holes 24a are formed in the outer peripheral portion of the upper collector 20a. The provision of the semicircular burring holes 24a in the outer peripheral portion of the upper collector 20a increases a number and an area of welding spots in the outer peripheral portion and improves the current-collecting performance. In this case, as shown in the side view in Fig. 5B, a beveled portion X is formed at the tip end of the sidewall of the outer slit 23a. In this manner, the provision of the beveled portion X at the tip end of the sidewall of the outer slit 23a prevents snagging of the upper collector 20a and thus improves ease of handling, thereby improving production efficiency.

### (2) Second Modification

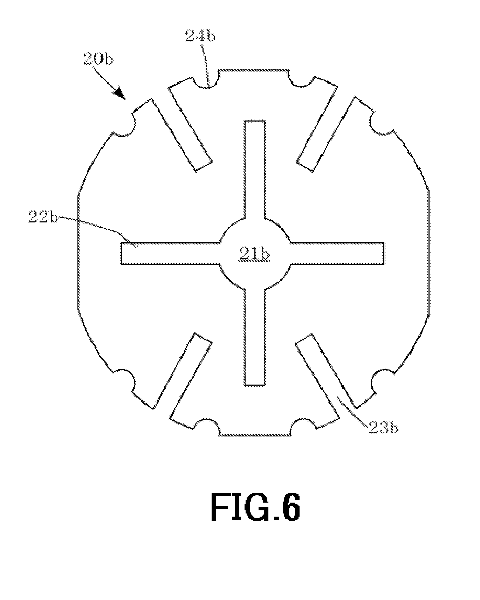

An upper collector 20b (in this case, a positive electrode collector) according to a second modification is formed in an approximately circular shape (having the maximum diameter of 30 mm), as shown in Fig. 6. A central opening 21b for receiving a welding electrode is formed at the central portion. A plurality of (four in this example, although any appropriate number can be set) inner slits 22b open to the central opening 21b are arranged radially from the central opening 21b toward the peripheral portion. A plurality of (four in this example, although any appropriate number can be set) outer slits 23b open to the outside of the upper collector 20b are arranged radially toward the central opening 21b. The inner slits 22b and the outer slits 23b are formed by a burring process. Furthermore, an appropriate number (eight in this example) of semicircular burring holes 24b are formed in the outer peripheral portion of the upper collector 20b. Although not shown, a beveled portion X as shown in Fig. 5B is formed at the tip end of the sidewall of the outer slit 23b.

### (3) Third Modification

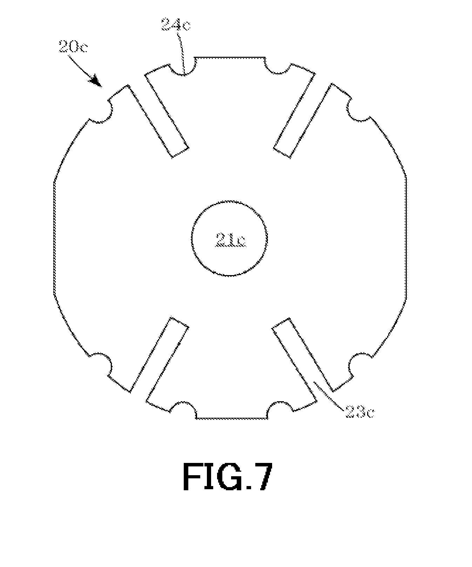

An upper collector (in this case, a positive electrode collector) 20c according to a third modification is formed in an approximately circular shape (having the maximum diameter of 30 mm), as shown in Fig. 7. A central opening 21c for receiving a welding electrode is formed at the central portion. A plurality of (four in this example, although any appropriate number can be set) outer slits 23c open to the outside of the upper collector 20c are arranged radially toward the central opening 21c. The outer slits 23c are formed by a burring process. Furthermore, an appropriate number (eight in this example) of semicircular burring holes 24c are formed in the outer peripheral portion of the upper collector 20c. Although not shown, a beveled portion X as shown in Fig. 5B is formed at the tip end of the sidewall of the outer slit 23c.

### (3) Fourth Modification

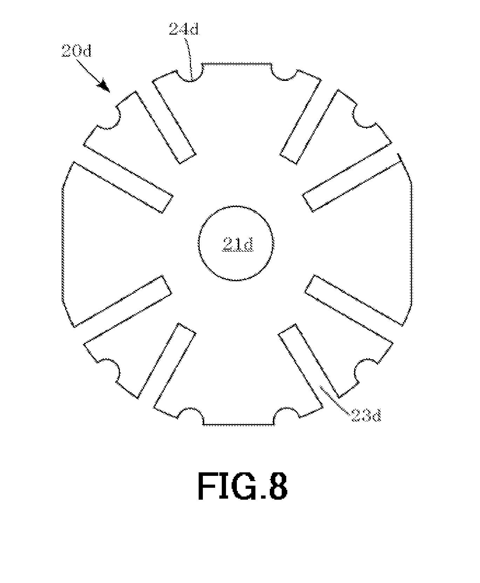

An upper collector (in this case, a positive electrode collector) 20d according to a fourth modification is formed in an approximately circular shape (having the maximum diameter of 30 mm), as shown in Fig. 8. A central opening 21d for receiving a welding electrode is formed at the central portion. A plurality of (eight in this example, although any appropriate number can be set) outer slits 23d open to the outside of the upper collector 20d are arranged radially toward the central opening 21d. The outer slits 23d are formed by a burring process. Furthermore, an appropriate number (eight in this example) of semicircular burring holes 24d are formed in the outer peripheral portion of the upper collector 20d. Although not shown, a beveled portion X as shown in Fig. 5B is formed at the tip end of the sidewall of the outer slit 23d.

### (3) Fifth Modification

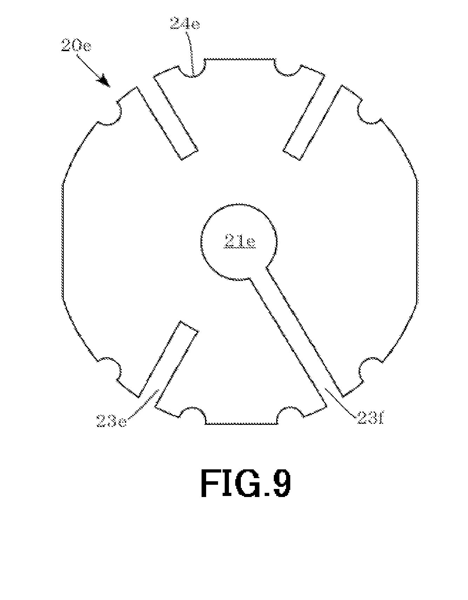

An upper collector (in this case, a positive electrode collector) 20e according to a fifth modification is formed in an approximately circular shape (having the maximum diameter of 30 mm), as shown in Fig. 9. A central opening 21e for receiving a welding electrode is formed at the central portion. A plurality of (three in this example, although any appropriate number can be set) outer slits 23e open to the outside of the upper collector 20e are arranged radially toward the central opening 21e. A communication slit 23f open to the outside is formed in communication with the central opening 21e. The outer slits 23e and the communication slit 23f are formed by a burring process. Furthermore, an appropriate number (eight in this example) of semicircular burring holes 24e are formed in the outer peripheral portion of the upper collector 20e. Although not shown, beveled portions X as shown in Fig. 5B are formed at the tip end of the sidewall of the outer slit 23e and the tip end of the sidewall of the communication slit 23f.

### 4. Modifications of Current-Collecting Lead

In the embodiment above, the current-collecting lead (positive electrode current-collecting lead) 10 includes the openings 11a formed on the circumference on the approximately central line of the flat surface part 11 and the six first welding projections 11b formed at approximately regular intervals at locations where the openings 11a are not arranged. However, the current-collecting lead suitable for the upper collectors (positive electrode collectors) according to the modifications above is also applicable to various modifications. Modifications of the current-collecting lead (positive electrode current-collecting lead) are discussed below.

### (1) First Modification

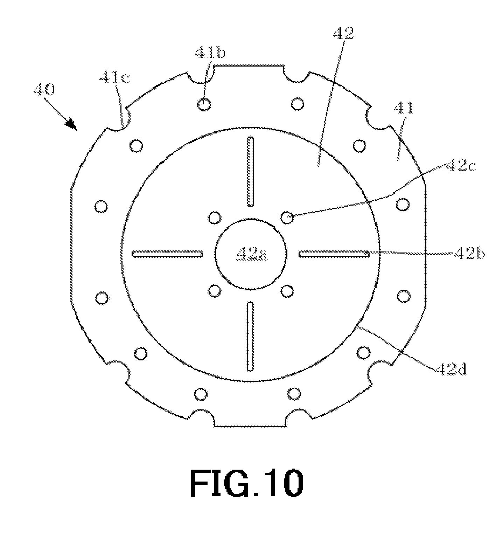

A current-collecting lead (in this case, a current-collecting lead for the positive electrode) 40 according to a first modification has a configuration almost similar to that of the current-collecting lead 10 in the foregoing embodiment. As shown in Fig. 10, the current-collecting lead 40 includes an approximately ring-shaped flat surface part 41 to be welded to the upper collectors 20, 20a, 20b, 20c, 20d, or 20e and a top part 42 formed to be curved and protrude approximately in the shape of a dome from the flat surface part 41 and to be welded to the sealing assembly 36. In this case, twelve first welding projections 41b are formed at regular intervals on the circumference on the approximately central line of the approximately ring-shaped flat surface part 41 so as to protrude toward the upper collectors 20, 20a, 20b, 20c, 20d, or 20e. Openings 41c having the same shape as that of burring holes 24, 24a, 24b, 24c, 24d, or 24e are formed at locations corresponding to the semicircular burring holes 24, 24a, 24b, 24c, 24d, or 24e formed in the outer peripheral portion of the upper collectors 20, 20a, 20b, 20c, 20d, or 20e.

On the other hand, in the top part 42, a plurality of slits 42b are formed at regular intervals, similar to those of the current-collecting lead 10 in the embodiment above. A central opening 42a is formed at the central portion that is the apex of the top part 42. A plurality of second welding projections 42c to be welded to the sealing plate 36a of the sealing assembly 36 are formed at approximately regular intervals around the central opening 42a so as to protrude toward the sealing assembly 36. Also in this case, similar to the current-collecting lead 10 in the foregoing embodiment, as shown in Fig. 4, the top part 42 is to be brought into surface contact with the corner portion of the convex portion 36a-1 formed on the lower surface of the sealing assembly 36. In order to do so, a base portion 42d is formed so as to satisfy the relation D2 > D1, where D1 is the diameter of the convex portion 36a-1 of the sealing plate 36a and D2 is the diameter of the base portion 42d of the top part 42 that is adjacent to the flat surface part 41.

### (2) Second Modification

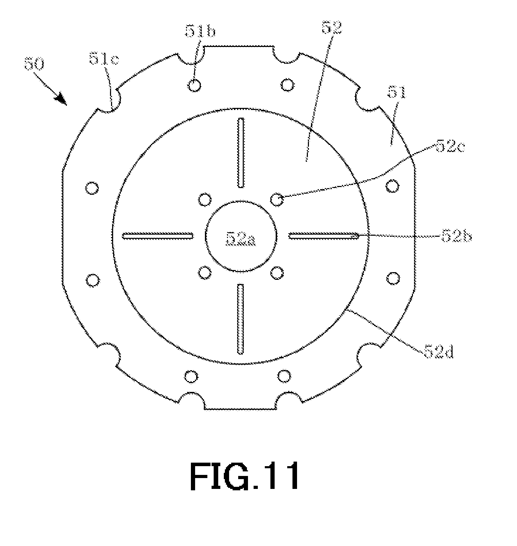

A current-collecting lead (in this case, a current-collecting lead for the positive electrode) 50 according to a second modification has a configuration almost similar to that of the current-collecting lead 10 in the foregoing embodiment. As shown in Fig. 11, the current-collecting lead 50 includes an approximately ring-shaped flat surface part 51 to be welded to the upper collectors 20, 20a, 20b, 20c, 20d, or 20e and a top part 52 formed to be curved and protrude approximately in the shape of a dome from the flat surface part 51 and to be welded to the sealing assembly 36. In this case, eight first welding projections 51b are formed at regular intervals on the circumference on the approximately central line of the approximately ring-shaped flat surface part 51 so as to protrude toward the upper collectors 20, 20a, 20b, 20c, 20d, or 20e. Openings 51c having the same shape as that of burring holes 24, 24a, 24b, 24c, 24d, or 24e are formed at locations corresponding to the semicircular burring holes 24, 24a, 24b, 24c, 24d, or 24e formed in the outer peripheral portion of the upper collectors 20, 20a, 20b, 20c, 20d, or 20e.

On the other hand, in the top part 52, a plurality of slits 52b are formed at regular intervals, similar to those of the current-collecting lead 10 in the embodiment above. A central opening 52a is formed at the central portion that is the apex of the top part 52. A plurality of second welding projections 52c to be welded to the sealing plate 36a of the sealing assembly 36 are formed at approximately regular intervals around the central opening 52a so as to protrude toward the sealing assembly 36. Also in this case, similar to the current-collecting lead 10 in the foregoing embodiment, as shown in Fig. 4, the top part 52 is to be brought into surface contact with the corner portion of the convex portion 36a-1 formed on the lower surface of the sealing assembly 36. In order to do so, a base portion 52d is formed so as to satisfy the relation D2 > D1, where D1 is the diameter of the convex portion 36a-1 of the sealing plate 36a and D2 is the diameter of the base portion 52d of the top part 52 that is adjacent to the flat surface part 51.

### Evaluation Test on Combination of Upper Collector and Current-Collecting Lead

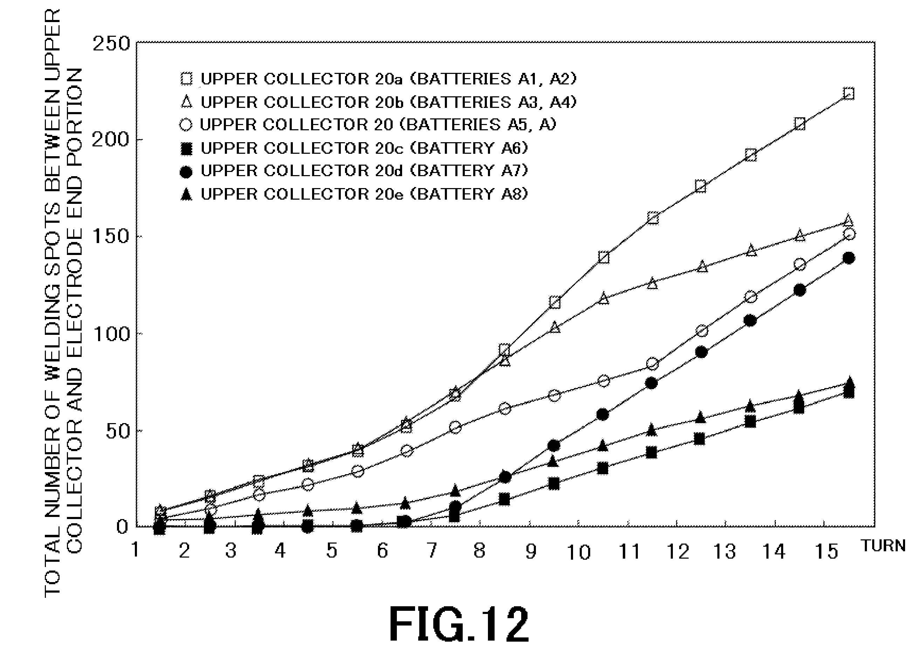

Nickel-metal hydride storage batteries A1, A2, A3, A4, A5, A6, A7, and A8 were fabricated as cylindrical secondary batteries in the foregoing manner, using the upper collectors 20, 20a, 20b, 20c, 20d, and 20e having the above-noted structures, the spiral electrode group 30a, the negative electrode collector, and the current-collecting leads 10, 40, and 50. The fabricated nickel-metal hydride storage batteries A1 to A8 were disassembled to obtain the total number of welding spots between the upper collectors 20, 20a, 20b, 20c, 20d, and 20e and the substrates exposed at the end portions of the positive electrodes. The results are shown in Fig. 12. In Fig. 12, the horizontal axis represents the number of turns the spiral electrode group 30a is wound, and the vertical axis represents the total number of welding spots. It is noted that the central portion of the spiral electrode group 30a is assumed as the first turn.

The battery A1 was formed with the current-collecting lead 40 welded to the upper collector 20a. The battery A2 was formed with the current-collecting lead 10 welded to the upper collector 20a. The battery A3 was formed with the current-collecting lead 50 welded to the upper collector 20b. The battery A4 was formed with the current-collecting lead 40 welded to the upper collector 20b. The battery A5 was formed with the current-collecting lead 40 welded to the upper collector 20. The battery A6 was formed with the current-collecting lead 40 welded to the upper collector 20c. The battery A7 was formed with the current-collecting lead 40 welded to the upper collector 20d. The battery A8 was formed with the current-collecting lead 40 welded to the upper collector 20e.

On the other hand, the resultant batteries A1 to A8 and the battery A in the foregoing embodiment were charged in the atmosphere at a temperature of 25°C with charging current of 3.0 A up to SOC 120% and, after 1-hour interval in the atmosphere at a temperature of 25°C, left for 24 hours in the atmosphere at a temperature of 60°C. Thereafter, the batteries were discharged with discharging current of 6.0 A in the atmosphere at a temperature of 40°C until the battery voltages reached 0.9 V. This cycle was repeated three times to activate the batteries. Then, the batteries were charged in the atmosphere at a temperature of 25°C at 6.0 A to 50% battery capacity (SOC 50%), and after 1-hour interval, 10-second discharge, 20-second charge, and 30-minute interval were repeated in the order of 40 A discharge → pause → 20 A charge → pause → 80 A discharge → pause → 40 A charge → pause → 120 A discharge → pause → 60 A charge → pause → 160 A discharge → pause → 80 A charge → pause → 200 A discharge → pause → 100 A charge. Then, the battery voltages (V) at the time of 10-second discharge were plotted against the discharging current (A), and the absolute value of the slope of a line obtained by the least-squares method was assumed as a battery resistance. Then, the ratio of battery resistance of each battery with respect to the battery resistance of the battery A was found as a battery resistance ratio. The results are shown in Table 2 below.

**Table 2**

| Battery | Upper collector (positive electrode collector) | Current-collecting lead (positive electrode lead) | Battery resistance ratio |
|---|---|---|---|
| A1 | 20a | 40 | 0.87 |
| A2 | 20a | 10 | 0.89 |
| A3 | 20b | 50 | 0.92 |
| A4 | 20b | 40 | 0.91 |
| A5 | 20 | 40 | 0.98 |
| A6 | 20c | 40 | 1.04 |
| A7 | 20d | 40 | 1.00 |
| A8 | 20e | 40 | 1.02 |
| A | 20 | 10 | 1.00 |

As is clear from Fig. 12 and Table 2, the battery resistance ratios of batteries A1 to A5 are smaller than that of the battery A, whereas the battery resistance ratios of the batteries A6 to A8 are equivalent to or larger than that of the battery A. This is because the upper collector 20a used in the battery A1 and the battery A2, and the upper collector 20b used in the battery A3 and the battery A4 have more welding spots to the substrate exposed at the positive electrode end portion than the upper collectors 20, 20c, 20d, and 20e. In particular, because of the inner slits 22a and 22b arranged radially from the central opening 21a toward the peripheral portion, more welding spots to the positive electrode substrate can be formed at the central portion.

There is not so much difference in the total number (sum) of welding spots between the upper collector 20b used in the battery A3 and the battery A4 and the upper collector 20 used in the battery A and the battery A5. However, in the upper collector 20, a number and an area of welding spots tends to increase in the outer peripheral portion. It follows that the welding spot arrangement in the longitudinal direction of the electrode plate is not uniform in the upper collector 20 as compared with the upper collector 20b. Furthermore, in the upper collectors 20c, 20d, and 20e, the welding spots to the substrate exposed at the positive electrode end portion are few at the central portion and are present disproportionately in the outer peripheral portion. Therefore, in the batteries A6 to A8 using the upper collectors 20c, 20d, and 20e, the electric current cannot be collected uniformly from the entire positive electrode, resulting in the larger battery resistance ratios.

In the upper collector 20a used in the batteries A1 and A2, a number and an area of welding spots to the substrate exposed at the positive electrode end portion increases in the vicinity of the ninth turns of winding, as compared with the upper collector 20b used in the batteries A3 and A4. This is because the ratio between the number of outer slits 23a extending from the outer peripheral portion toward the central portion and the number of inner slits 22a extending from the central portion toward the outer peripheral portion is set to be 2:1. In this manner, the larger number of outer slits 23a than the number of inner slits 22a can compensate for the reduced current-collecting performance resulting from the increased distance between welding spots to the substrate exposed at the positive electrode end portion, at the outer peripheral portion.

It is understood that in the battery A1 using the upper collector 20a having in total twelve outer slits 23a and inner slits 22a and the current-collecting lead 40 having the same number of first welding projections 41b as the slits 23a and 22a, the battery resistance ratio is smaller than in the battery A2 using the upper collector 20a and the current-collecting lead 10 having the smaller number (six) of first welding projections 11b than the slits 23a and 22a of the collector. This is presumably because, although the provision of the slits 23a and 22a inhibits the current path, the formation of the first welding projections 41b between all the slits increases a number and an area of welding spots, thereby minimizing the effect of inhibited current path.

Considering the results as described above, it is desirable to use the upper collector having the outer slits extending from the outer peripheral portion toward the central portion and the inner slits extending from the central portion toward the outer peripheral portion. In particular, it is preferable to use the upper collector having more outer slits than inner slits. Furthermore, it is preferable to use the current-collecting lead in combination with the upper collector having the outer slits and the inner slits, and it is particularly preferable to use the current-collecting lead having the first welding projections formed between all the slits. In this case, given that the top part of the current-collecting lead has a plurality of slits formed radially toward the flat surface part at a distance away from the central portion, if the inner slits are formed in the same radial arrangement as the slits formed in the top part of the current-collecting lead, the positioning of the current-collecting lead with the upper collector is facilitated.

Preferably, in the upper collector of the foregoing embodiment and modifications, a convex portion (from the upper collector toward the current-collecting lead or from the upper collector toward the side opposite to the current-collecting lead) is formed to extend from the outer peripheral portion toward the central portion, and, in the flat surface part of the current-collecting lead of the foregoing embodiment and modifications, a convex portion (from the current-collecting lead toward the side opposite to the upper collector or from the current-collecting lead toward the upper collector) is formed to extend from the outer peripheral portion toward the central portion. In this case, the convex portions formed in the upper collector and the convex portions formed in the current-collecting lead are formed in the same radial arrangement. This facilitates the positioning of the current-collecting lead with the upper collector.

In the foregoing embodiment, in order to weld the contact portion between the top part 12 and the convex portion 36a-1 formed on the lower surface of the sealing plate 36a, the welding projections 12c are formed around the central opening 12a of the top part 12 so as to protrude toward the sealing assembly 36. However, in order to weld the contact portion between the top part 12 and the convex portion 36a-1 formed on the lower surface of the sealing plate 36a, in place of the welding projections 12c provided on the top part 12, as shown in a sealing assembly 38 in a modification in Fig. 3E, a plurality of welding projections 38a-2 may be formed so as to protrude toward the top part 12, at locations corresponding to the peripheral portion of the central opening 12a in a convex portion 38a-1 formed on the lower surface of a sealing plate 38a.
Although the invention is applied to a nickel-metal hydride storage battery in the foregoing embodiment, the invention is not limited to a nickel-metal hydride storage battery and is applicable to an alkaline storage battery such as a nickel-cadmium storage battery or a lithium-ion battery, as a matter of course.

## Claims

1. A cylindrical secondary battery (A) comprising:
a positive electrode plate (31);
a negative electrode plate (32);
a separator (33) interposed between the positive electrode plate and the negative electrode plate;
the positive electrode plate, the negative electrode plate, and the separator being spirally wounded to form a spiral electrode group (30a);
an electrode substrate (31a) extended from an upper portion of one of the positive and negative electrode plate;
an upper collector (20) welded to the electrode substrate;
a cylindrical metal outer can (35) having a mouth through which the spiral electrode group, the electrode substrate, and the upper collector are contained inside the cylindrical metal outer can;
a sealing assembly (36) for sealing the mouth portion of the cylindrical metal outer can; and
a current-collecting lead (10) for connecting the current-collecting lead to the sealing assembly;
the current-collecting lead formed by press-forming a metal plate including:
a flat surface part (11) formed in approximately the same shape as an outer shape of the upper collector and welded to the upper collector, and
a top part (12) formed to be curved and protrude approximately in the shape of a dome from the flat surface part and welded to the sealing assembly,
a portion defining a central opening (12a) being formed at a central portion of the top part,
around the central opening, a plurality of welding projections (12c) being formed to protrude from the top part toward the sealing assembly,
the plurality of welding projections serving as welding spots to the sealing assembly, and
the top part being deformed by a pressing force from the sealing assembly to be brought into surface contact with a corner portion of a convex portion (36a-1) formed on a lower surface of the sealing assembly.

2. A cylindrical secondary battery (A) comprising:
a positive electrode plate (31);
a negative electrode plate (32);
a separator (33) interposed between the positive electrode plate and the negative electrode plate;
the positive electrode plate, the negative electrode plate, and the separator being spirally wounded to form a spiral electrode group (30a);
an electrode substrate (31a) extended from an upper portion of one of the positive and negative electrode plate;
an upper collector (20) welded to the electrode substrate;
a cylindrical metal outer can (35) having a mouth through which the spiral electrode group, the electrode substrate, and the upper collector are contained inside the cylindrical metal outer can;
a sealing assembly (38) for sealing the mouth portion of the cylindrical metal outer can; and
a current-collecting lead (10) for connecting the current-collecting lead to the sealing assembly;
the current-collecting lead formed by press-forming a metal plate including:
a flat surface part (11) formed in approximately the same shape as an outer shape of the upper collector and welded to the upper collector, and
a top part (12) formed to be curved and protrude approximately in the shape of a dome from the flat surface part and welded to the sealing assembly,
a portion defining a central opening (12a) being formed at a central portion of the top part,
a plurality of welding projections (38-2) being formed at the convex portion (38-1) formed on a lower surface of the sealing assembly (38) so as to protrude from the convex portion toward the periphery of the central opening of the top part,
the plurality of welding projections serving as welding spots to the top part, and
the top part being deformed by a pressing force from the sealing assembly to be brought into surface contact with a corner portion of a convex portion formed on the lower surface of the sealing assembly.

3. The cylindrical secondary battery according to claim 1 or 2, wherein an upper flat surface portion (12e) is formed in a region including the central portion of the top part, and an inner angle R1 between the upper flat surface portion and the inclined region of the top part is set to be 152° or more and 165° or less (152° ≤ R1 ≤ 165°) in a boundary portion between the upper flat surface portion and an inclined region of the top part.

4. The cylindrical secondary battery according to claim 1 or 2, wherein an outer angle R2 between the flat surface part and the inclined region of the top part is 90° or more and 115° or less (90° ≤ R2 ≤ 115°) in a boundary portion between the flat surface part and the inclined region of the top part.

5. The cylindrical secondary battery according to claim 1 or 2, wherein the diameter D1 of the convex portion formed on the lower surface of the sealing assembly is smaller than the diameter D2 of a base portion of the top part that is adjacent to the flat surface part.

6. The cylindrical secondary battery according to claim 1 or 2, wherein a central opening (21a) is formed at the central portion of the upper collector,
a plurality of inner slits (22a) open to the central opening and arranged radially from the central opening toward the peripheral portion and a plurality of outer slits (23a) open to the outside of the upper collector and arranged radially toward the central opening are formed by a burring process, and
the burrs formed at the end portions of the inner and outer slits are welded to one electrode substrate extending from the upper portion of the spiral electrode group.

7. The cylindrical secondary battery according to claim 6, wherein the ratio between the number of outer slits and the number of inner slits is 2:1.

8. The cylindrical secondary battery according to claim 1 or 2, wherein a semicircular burring hole (24) is formed at the outer peripheral portion of the upper collector, and the semicircular burring hole is welded to one electrode substrate extending from the upper portion of the spiral electrode group.

9. The cylindrical secondary battery according to claim 6, wherein a beveled portion (X) is formed at a tip end of a sidewall of the outer slit formed in the upper collector.

10. The cylindrical secondary battery according to claim 1 or 2, wherein a plurality of slits (12b) are formed at regular intervals radially toward the flat surface part at a distance away from the central opening formed at the central portion of the top part of the current-collecting lead.

11. The cylindrical secondary battery according to claim 1 or 2, wherein in the outer peripheral portion of the flat surface part of the current-collecting lead welded to the upper collector, semicircular openings (11c) each having the same shape as the semicircular burring hole (24) be formed at locations corresponding to a plurality of semicircular burring holes formed in the outer peripheral portion of the upper collector.

12. A method of manufacturing a cylindrical secondary battery (A) comprising a positive electrode plate (31), a negative electrode plate (32), a separator (33) interposed between the positive electrode plate and the negative electrode plate, the positive electrode plate, the negative electrode plate, and the separator being spirally wounded to form a spiral electrode group (30a), an electrode substrate (31a) extended from an upper portion of one of the positive and negative electrode plate, an upper collector (20) welded to the electrode substrate, a cylindrical metal outer can (35) having a mouth through which the spiral electrode group, the electrode substrate, and the upper collector are contained inside the cylindrical metal outer can, a sealing assembly (36) for sealing the mouth portion of the cylindrical metal outer can, and a current-collecting lead (10) for connecting the current-collecting lead to the sealing assembly, the method comprising:
welding the upper collector to one electrode substrate extending from an upper portion of the spiral electrode group;
welding the current-collecting lead to the upper collector, the current-collecting lead being formed by press-forming a metal plate and including a flat surface part (11) formed in approximately the same shape as the outer shape of the upper collector and a top part (12) formed to be curved and protrude approximately in the shape of a dome from the flat surface part, the top part having a central opening (12a) at a central portion thereof and a plurality of welding projections (12c) formed around the central opening to protrude from the top part toward a sealing assembly;
accommodating the electrode group with the current-collecting lead welded to the upper collector in a cylindrical metal outer can, and thereafter pouring an electrolyte into the outer can; and
arranging the sealing assembly, having a convex portion (36a-1) on the lower surface thereof, on the mouth portion of the outer can containing the electrolyte, bringing the convex portion into abutment with the top part so as to weld contact portions between the plurality of welding projections and the convex portion, and pressing the sealing assembly such that a corner portion of the convex portion is in surface contact with the top part.

13. A method of manufacturing a cylindrical secondary battery (A) comprising a positive electrode plate (31), a negative electrode plate (32), a separator (33) interposed between the positive electrode plate and the negative electrode plate, the positive electrode plate, the negative electrode plate, and the separator being spirally wounded to form a spiral electrode group (30a), an electrode substrate (31a) extended from an upper portion of one of the positive and negative electrode plate, an upper collector (20) welded to the electrode substrate, a cylindrical metal outer can (35) having a mouth through which the spiral electrode group, the electrode substrate, and the upper collector are contained inside the cylindrical metal outer can, a sealing assembly (38) for sealing the mouth portion of the cylindrical metal outer can, and a current-collecting lead (10) for connecting the current-collecting lead to the sealing assembly, the method comprising:
welding the upper collector to one electrode substrate extending from an upper portion of the spiral electrode group;
welding the current-collecting lead to the upper collector, the current-collecting lead being formed by press-forming a metal plate and including a flat surface part (11) formed in approximately the same shape as the outer shape of the upper collector and a top part (12) formed to be curved and protrude approximately in the shape of a dome from the flat surface part, the top part having a central opening (12a) at a central portion thereof;
accommodating the electrode group with the current-collecting lead welded to the upper collector in a cylindrical metal outer can, and thereafter pouring an electrolyte into the outer can; and
arranging the sealing assembly, having a convex portion (38-1) on the lower surface thereof, on the mouth portion of the outer can containing the electrolyte, and a plurality of welding projections (38-2) protruding from the convex portion toward the periphery of the central opening of the top part, welding contact portions between the plurality of welding projections provided to the convex portion and the top part, and pressing the sealing assembly such that a corner portion of the convex portion is in surface contact with the top part.
